# EUROPÄISCHE PATENTSCHRIFT

(11) **EP 2 277 820 B1**
(45) Veröffentlichungstag und Bekanntmachung des Hinweises auf die Patenterteilung: **21.11.2012**
(21) Anmeldenummer: 10007287.5
(22) Anmeldetag: 14.07.2010
(51) Int. Cl.: B60L 11/18, B66F 9/075, B60K 1/04

(54) **Flurförderzeug mit verriegelbaren Batterieträger**
Forklift with lockable battery holder
Chariot élévateur doté d'un support de batterie verrouillable

(30) Priorität: 24.07.2009 DE 102009034703
(43) Veröffentlichungstag der Anmeldung: 26.01.2011
(73) Patentinhaber: Jungheinrich Aktiengesellschaft, 22047 Hamburg (DE)
(72) Erfinder: Altuntas, Hasan, 22147 Hamburg (DE); Cengiz, Yusuf, 22049 Hamburg (DE); Pätsch, Martin, 20535 Hamburg (DE)
(74) Vertreter: Schildberg, Peter

(56) Entgegenhaltungen:
- EP-A1- 1 930 288
- DE-A1-102004 047 339
- DE-U1- 20 105 883

## Beschreibung

Die Erfindung bezieht sich auf ein Flurförderzeug in dessen Rahmen ein Batterieträger angeordnet ist zur Aufnahme eines Batterieblocks nach dem Oberbegriff des Patentanspruchs 1.

Ein derartiges Flurförderzeug ist etwa aus DE 10 2006 057 490 A1 bekannt geworden. Zwei Hebel der Verriegelungsvorrichtung bilden einen Kniehebelverschluss, wobei ein erster Hebel um eine fahrzeugfeste Achse gelagert ist. Der zweite Hebel ist am ersten Hebel schwenkbar gelagert und erfasst eine Wandfläche des Batterieblocks mit Hilfe eines Puffers. In der Entriegelungsposition kann der Batterieblock zu einer Seite horizontal herausbewegt werden.

Bei dem bekannten Flurförderzeug ist die aufzuwendende Kraft bei der Entnahme des Batterieblocks recht hoch, weil zuerst eine Losbrechkraft überwunden werden muss, insbesondere wenn der Batterieblock im Träger verkantet ist. Ferner steht die Batterie nach dem Entriegeln noch am Anschlag, daher bleibt einer Hand für die Entnahme nur wenig Platz die Batterie zu hintergreifen.

Der Erfindung liegt die Aufgabe zugrunde, ein Flurförderzeug mit einer Verriegelungsvorrichtung für einen Batterieblock zu schaffen, bei der ein schneller und einfacher Batteriewechsel möglich ist und die Entnahme der Batterie erleichtert ist. Die erfindungsgemäße Verriegelungsvorrichtung soll eine Verwendung unmodifizierter Standardbatterien erlauben.

Die Aufgabe wird durch ein Flurförderzeug mit den Merkmalen aus Anspruch 1 gelöst. Vorteilhafte Ausgestaltungen bilden den Gegenstand der Unteransprüche.

Bei der Erfindung ist in einem Rahmen eines Flurförderzeugs ein Batterieträger angeordnet, in den eine Energiequelle, bevorzugt ein Batterieblock hinein- oder aus diesem heraus bewegbar ist. Mit dem Batterieträger ist eine zwei zusammenwirkende Hebel aufweisende Verriegelungsvorrichtung verbunden, welche den Batterieblock im eingebauten Zustand gegenüber dem Rahmen dem Batterieträger lösbar verriegelt. Die Vorrichtung zum Verriegeln des Batterieblocks weist mindestens einen ersten Hebel auf, der um eine fahrzeugfeste Achse gelagert ist sowie mindestens einen zweiten Hebel, der am ersten Hebel schwenkbar gelagert und so ausgeführt ist, dass er mindestens eine Wandfläche des Batterieblocks mit Hilfe mindestens eines Puffers klemmend erfasst. Durch Betätigung des ersten Hebels ist der Puffer mit einer Wand des Batterieblocks, vorzugsweise der Stirnwandinnenseite, in oder außer Eingriff bringbar, um die zugehörige Wand bzw. den Batterieblock klemmend gegen einen rahmenfesten Anschlag zu drücken. Mindestens ein dritter Hebel wird bei einem Öffnen des ersten Hebels in den Batterieträger hineingeführt und schiebt bei weiterer Betätigung des Hebels den Batterieblock von der Verriegelungsvorrichtung weg. Durch den so mittels Hebelkraft gewonnenen Abstand zwischen dem Batterieblock und der Rahmenwand mit der Verriegelungsvorrichtung ist die Entnahme der Batterie erleichtert. Ein Benutzer kann nun auf einfache Weise den Batterieblock hintergreifen und aus dem Batterieträger entnehmen. Statt eines Batterieblocks als Energiequelle kann auch eine Brennstoffzelle oder sonstiger Energiespeicher vorgesehen sein.

Erster und zweiter Hebel können einen Kniehebelverschluss bilden, um den Puffer wahlweise gegen den Batterieblock zu klemmen oder freizugeben, wobei in einer Verriegelungsposition der erste Hebel über den Totpunkt des Kniehebelverschlusses verschwenkt ist.

Bei einer Ausgestaltung der Erfindung ist an dem Batterieträger eine Seitenwand anbringbar, die an einem oberen Ende ein Lagerbauteil hält, an dem der erste Hebel schwenkbar gelagert ist. Das Lagerbauteil weist eine Anschlagfläche auf, gegen welche sich die zugeordnete Stirnwand des Batterieblocks anlegt. Der zweite Hebel ist am Lagerbauteil so geführt, dass ein Verriegelungsabschnitt des zweiten Hebels in der Verriegelungsposition den oberen Teil der Wandfläche des Batterieblocks von innen klemmend erfasst. In einer Freigabeposition ist der Verriegelungsabschnitt so weit nach oben verschwenkt, dass der Batterieblock zumindest horizontal von der Seitenwand fort bewegbar ist. Das Lagerbauteil ist vorzugsweise ein getrenntes Bauteil, das zum Beispiel an der Seitenwand des Batterieträgers angeschweißt ist. Die Seitenwand kann an einer von beiden freien Endseiten des Batterieträgers angebracht werden, je nach Ausschubrichtung für den Batterieblock.

Dadurch, dass der Verriegelungsabschnitt die innere Wandfläche des Batterieblocks, die ohnehin etwas über die Oberseite der Batterie übersteht, erfasst, braucht der Batterieblock nicht im Hinblick auf die Verriegelung in besonderer Weise hin ausgelegt sein. Daher können unmodifizierte Standardbatterien verwendet werden. Eine Batterieentnahme ist zu beiden Seiten möglich, wobei die Montage der Seitenwand an der entsprechenden Seite des Batterieträgers erfolgt. Die Batterieverriegelung befindet sich somit nicht direkt am Fahrzeugrahmen, sondern an der bereits erwähnten Seitenwand. Der erste Hebel braucht nur in einer Richtung verschwenkt werden, um den zweiten Hebel in die Verriegelungs- bzw. Freigabeposition zu bringen. Die Betätigung ist daher ergonomisch und geht auf schnellstem Wege vonstatten.

Nach einer Ausgestaltung der Erfindung ist vorgesehen, dass der Verriegelungsabschnitt mindestens einen Puffer aus elastomerem Material aufweist. Der Puffer legt sich in der Verriegelungsstellung gegen die Innenseite der Stirnwand an und hält die Stirnwand des Batterieblockes gegen die Anschlagfläche im Lagerbauteil. Der Puffer wird unter Druck gesetzt, so dass auf diese Weise für den Kniehebelverschluss eine Vorspannung entsteht.

Bevorzugt ist ein Lagerstift für die Lagerung des zweiten Hebels am ersten Hebel ein bogenförmiger Schlitz im Lagerbauteil vorgesehen, in dem der Lagerstift geführt ist. Das Lagerbauteil kann nach einer weiteren Ausgestaltung der Erfindung einen Begrenzungsabschnitt aufweisen, gegen den ein Anschlagabschnitt des zweiten Hebels in Eingriff kommt, wenn der zweite Hebel in die Freigabestellung verschwenkt wird. Zu diesem Zweck kann der Begrenzungsabschnitt einen Haken und der Anlageabschnitt einen Anlagestift aufweisen. Dadurch wird ein Überschwenken des ersten Hebels bei der Bewegung in die Freigabeposition verhindert.

In einer bevorzugten Ausgestaltung weist der zweite Hebel zwei parallel beabstandete Hebelarme auf, die an parallel beabstandeten Hebelarmen des ersten Hebels angelenkt sind.

Vorzugsweise weist ein vertikaler Backenabschnitt des zweiten Hebels zwei seitlich beabstandete Puffer auf, die jeweils einer Anlagefläche des Lagerbauteils zugekehrt sind.

Bevorzugt schiebt der dritte Hebel beim Öffnen des ersten Hebels den Batterieblock um mindestens 30 mm aus dem Batterieträger heraus.

In einer bevorzugten Ausgestaltung ist der dritte Hebel an einem Lagerabschnitt des ersten Hebels angeordnet. Bevorzugt ist der dritte Hebel um eine Achse schwenkbar an dem ersten Hebel gelagert und wird beim Öffnen des ersten Hebels von einem Anschlag abgestützt. Durch eine solche Anordnung schwenkt der dritte Hebel beim Schließen des ersten Hebels entsprechend der Schwerkraft platzsparend in eine Stellung parallel zur Seitenwand des Batterieträgers und steht nicht aus dem Batterieträger heraus. Vorzugsweise schließen der dritte Hebel und der erste beim Wegschieben des Batterieblocks von der Verriegelungsvorrichtung einen Winkel von mehr als 90° ein.

Ein Ausführungsbeispiel der Erfindung wird nachfolgend anhand von Zeichnungen näher erläutert.
- Fig. 1: zeigt perspektivisch einen Batterieträger mit einem Batterieblock und einer Verriegelungsvorrichtung nach der Erfindung in der Verriege- lungsstellung.
- Fig. 2: zeigt einen vergrößerten Ausschnitt aus Fig. 1.
- Fig. 3: zeigt einen vergrößerten Ausschnitt aus Fig. 1 mit der Verriegelungs- vorrichtung in einer ersten Position.
- Fig. 4: zeigt die Verriegelungsvorrichtung nahe der Entriegelungsposition aus einer anderen Perspektive.
- Fig. 5: zeigt die Seitenansicht der Anordnung nach Fig. 4.
- Fig. 6: zeigt die Verriegelungsvorrichtung in der Entriegelungsposition

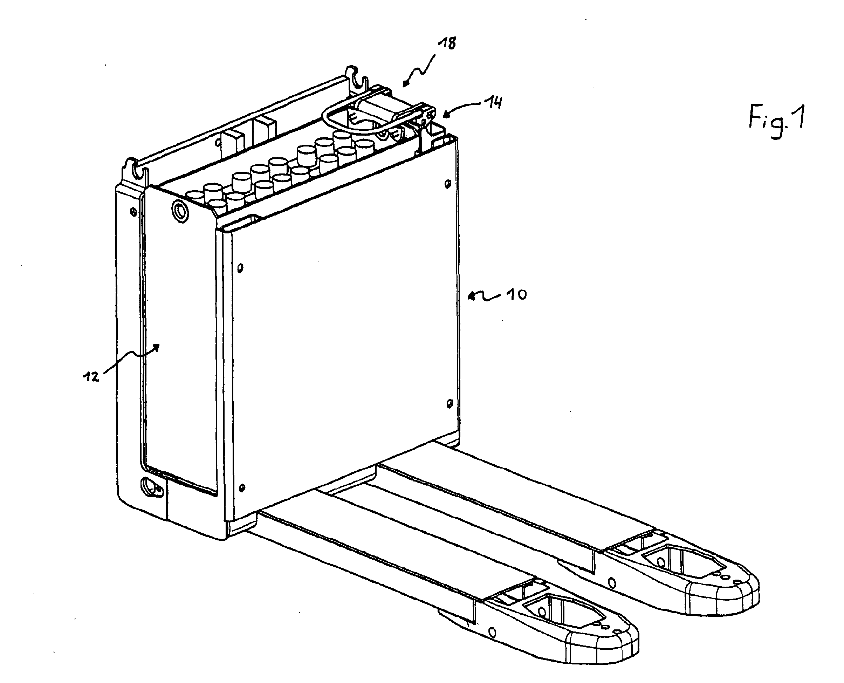

In Figur 1 ist ein Batterieträger 10 dargestellt, der im Rahmen eines nur angedeutet dargestellten Hubwagens angeordnet ist. Der Batterieträger 10 nimmt einen Batterieblock 12 auf, der Stirnwände und Seitenwände hat. Wie erkennbar, kann der Batterieblock 12 zu einer offenen, in Figur 1 linken Seite des Batterieträgers 10 bewegt werden. Die gegenüberliegende Stirnseite des Batterieträgers 10 ist von einer Seitenwand 14 abgeschlossen, die zum Beispiel an den Batterieträger 10 angeschraubt ist. Wahlweise kann die Seitenwand 14 auch an der in Figur 1 offenen Seite des Batterieträgers 10 verschraubt werden.

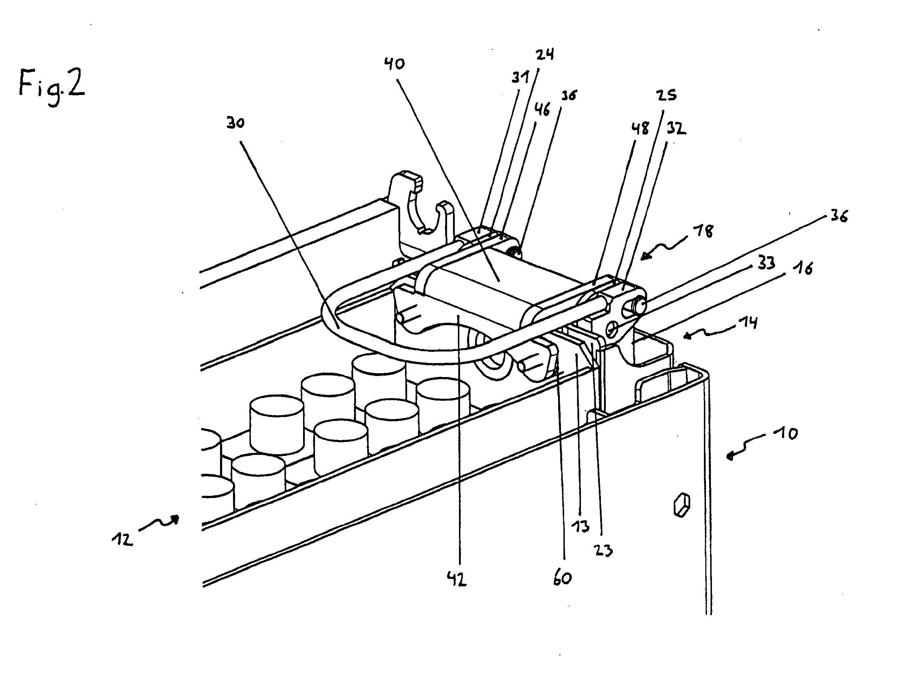

Die Seitenwand 14 trägt am oberen Ende ein Lagerbauteil 16 für eine Vernegelungsvorrichtung 18, die in Verbindung mit den Figuren 2 bis 6 nachfolgend näher beschrieben werden soll. Das Lagerbauteil 16 ist an der Seitenwand 14 angebracht, beispielsweise durch Verschweißung. Dies ist jedoch im Einzelnen nicht dargestellt. Das Lagerbauteil weist parallel zur Seitenwand 14 verlaufende Anschlagflächen 22, 23 sowie davon einwärts in Richtung Seitenwand 14 abgebogene Lagerwände 24, 25 auf.

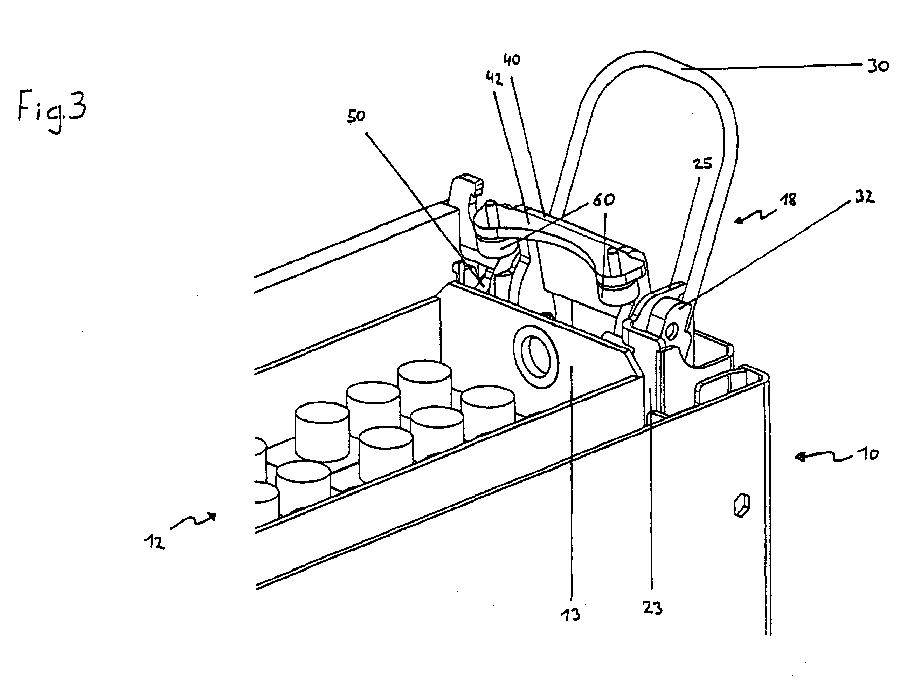

An den Lagerwänden 24, 25 sind Lagerabschnitte 31, 32 eines ersten bügelartigen Hebels 30 angelenkt, und zwar mit Hilfe eines Lagerbolzens 33. Mit Hilfe des Lagerbolzens 33 kann der Hebel 30 um eine horizontale Achse am Lagerbauteil 16 verschwenkt werden. In den Lagerabschnitten 31, 32 befindet sich außerdem je ein Lagerstift 36, der in einen bogenförmigen Schlitz 38 der Lagerwände 24, 25 eingreift und über den ein zweiter Hebel 40 am ersten Hebel 30 angelenkt ist. Die Schlitze 38 bilden Endlagenanschläge für die Hebelbetätigung. An einem Lagerabschnitt 31 des ersten Hebels 30 ist ferner ein dritter Hebel 50 schwenkbar um die Achse 51 angeordnet, der bei Betätigung der Verriegelungsvorrichtung 18 von einem Anschlag 35 gestützt durch eine Ausnehmung in einer Anschlagfläche 22 hindurch in den Batterieträger 10 hineinreicht (Fign. 3-6) und in der Verriegelungstellung frei nach unten, parallel zur Seitenwand 14 schwenkt.

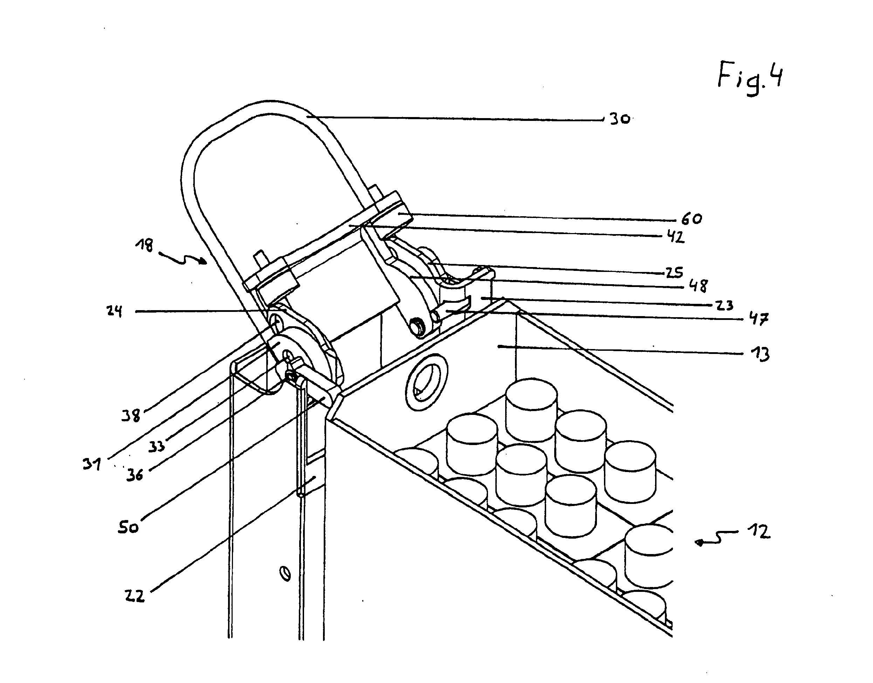

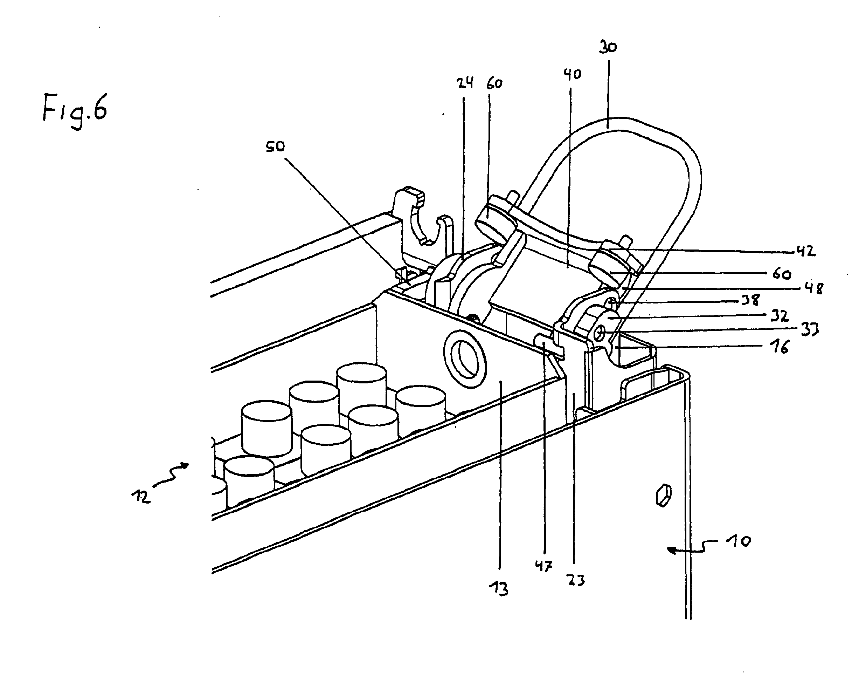

Der zweite Hebel 40 weist einen in der Position nach Fig. 2 vertikal abgewinkelten Backenabschnitt 42 auf. Der vertikale Abschnitt 42 ist zu beiden Seiten hin ohrenartig verlängert, und an diesen Verlängerungen sitzen zwei Gummipuffer 60. Wie in der Figur 2 zu erkennen, wirken die Gummipuffer 60 mit den Anschlagflächen 22, 23 des Lagerbauteils 16 zusammen. Zu beiden Seiten des zweiten Hebels 40 sind Hebelarme 46, 48 vorgesehen, welche mit den Lagerstiften 36 zusammenwirken. Wie in den Figuren 4 und 6 zu erkennen, wirken die Hebelarme 46, 48 mit einem Anschlagstift 47 zusammen, der einen Endlagenanschlag für die Bewegung des zweiten Hebels 40 bildet.

Erster und zweiter Hebel 30, 40 wirken wie ein Kniehebelverschluss zusammen. In einer Verriegelungsposition, wie sie in den Figuren 1 und 2 dargestellt ist, liegen die Achsen des Lagerbolzens 33 und des Lagerstifts 36 in der Höhe versetzt zueinander. Da die Puffer 60 gegen die Flächen 22, 23 wirken, erzeugen diese eine Vorspannung bei Überschreiten des Totpunktes, wenn der Hebel 30 von einer angehobenen in die in den Figuren 1 und 2 dargestellte horizontale Verriegelungsposition verschwenkt wird.

In der Verriegelungsposition gemäß den Figuren 1 und 2 greifen die Puffer 60 von innen gegen eine Stirnwand 13 des Batterieblocks 12. Bekanntlich stehen Wandabschnitte des Batterieblocks 12 nach oben über die aufgenommene Batterie über. Die Puffer 60 greifen daher auf die Innenseite der Stirnwand 13 oben an, um gemäß Figuren 1 und 2 den Batterieblock 12 in dieser Position gegen die Anschlagflächen 22, 23 zu halten und zu verriegeln.

Wird der Hebel 30 in die Freigabeposition verschwenkt, verschwenkt sich auch der zweite Hebel 40, und die Puffer 60 werden über den Rand des Batterieblocks 12 geschwenkt, wie dies in Figuren 3 bis 6 dargestellt ist. Fig. 3 zeigt eine Verschwenkung des Hebels 30 gegenüber der Verriegelungsposition nach den Figuren 1 und 2 um mehr als 90°. In etwa ab dieser Position schwenkt der dritte Hebel 50 gegen den am Lagerabschnitt 31 angeordneten Anschlag 35, wird mit der Hebelbewegung mitgestützt und tritt mit der Stirnwand 13 des Batterieblocks 12 in Kontakt.

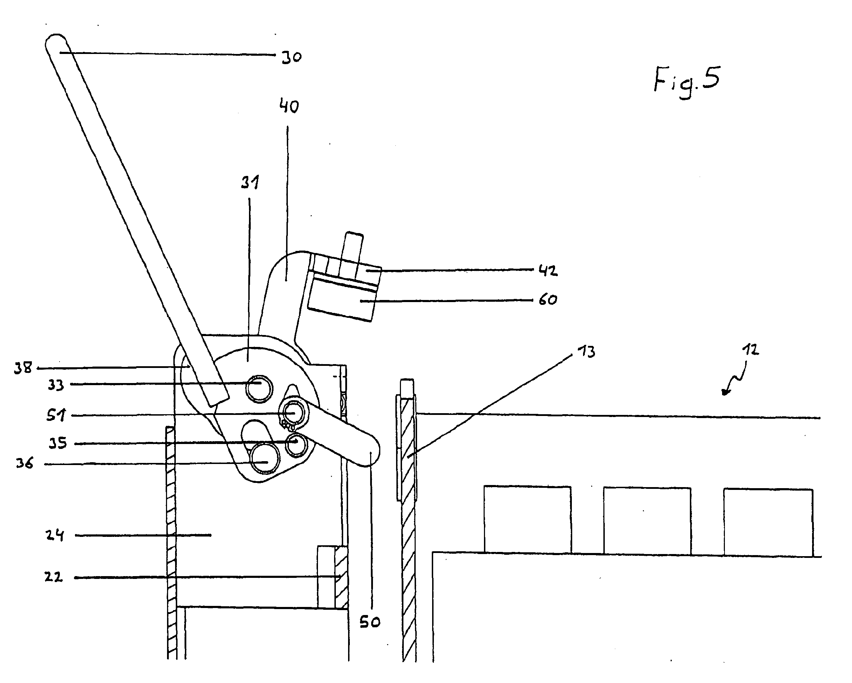

Bei weiterer Verschwenkung des Hebels 30 nach den Figuren 4 und 5 drückt der dritte Hebel 50 gegen die Stirnwand 13 des Batterieblocks 12 und schiebt diesen aus seiner Anlageposition mit den Anschlagflächen 22, 23 heraus. In der endgültigen Freigabeposition gemäß Fig. 6 liegt der zweite Hebel 40 am Anschlagstift 47 an und die Lagerstifte 36 liegen in den bogenförmigen Schlitzen 38 an einem Endlagenanschlag an, so dass ein weiteres Öffnen des ersten und zweiten Hebels 30, 40 nicht möglich ist. Die Schwenkposition des zweiten Hebels 40 ist jedoch so, dass die Batterie nicht nur seitlich herausbewegt werden kann, sondern auch nach oben. Die Puffer 60 sind dabei nicht mehr im Wege. Über den dritten Hebel 50 wurde der Batterieblock 12 einige Zentimeter von den Anschlagflächen 22, 23 abgeschoben und kann nun leicht ergriffen und aus dem Batterieträger 10 entnommen werden.

## Patentansprüche

1. Flurförderzeug, in dessen Rahmen ein Batterieträger (10) angeordnet ist, in den eine Energiequelle (12) hinein- oder aus diesem heraus bewegbar ist, wobei eine zwei zusammenwirkende Hebel (30, 40) aufweisende Verriegelungsvorrichtung (18) vorgesehen ist, welche die Energiequelle (12) im eingebauten Zustand gegenüber dem Rahmen bzw. einem Batterieträger (10) lösbar verriegelt, wobei die Vorrichtung (18) zum Verriegeln der Energiequelle (12)
- mindestens einen ersten Hebel (30) aufweist, der um eine fahrzeugfeste Achse gelagert ist und
- mindestens einen zweiten Hebel (40) aufweist, der am ersten Hebel (30) schwenkbar gelagert und so ausgeführt ist, dass er mindestens eine Wandfläche der Energiequelle (12) mit Hilfe mindestens eines Puffers (60) klemmend erfasst,
**dadurch gekennzeichnet, dass** mindestens ein dritter Hebel (50) vorgesehen ist, der bei einem Öffnen des ersten Hebels (30) in den Batterieträger (10) hineingeführt wird und die Energiequelle (12) von der Verriegelungsvorrichtung (18) wegschiebt.

2. Flurförderzeug nach Anspruch 1, **dadurch gekennzeichnet, dass** die Energiequelle (12) ein Batterieblock (12) ist.

3. Flurförderzeug nach Anspruch 1 oder 2, **dadurch gekennzeichnet, dass** erster und zweiter Hebel (30, 40) einen Kniehebelverschluss bilden, bei dem der erste Hebel (30) über den Totpunkt des Kniehebelverschlusses verschwenkt ist, wenn der zweite Hebel (40) in einer Verriegelungsposition ist.

4. Flurförderzeug nach einem der Ansprüche 1 bis 3, **dadurch gekennzeichnet, dass** an einem Ende des Batterieträgers (10) eine Seitenwand (14) anbringbar ist, die am oberen Ende ein Lagerbauteil (16) hält, an dem der erste Hebel (30) schwenkbar gelagert ist, das Lagerbauteil (16) eine Anschlagfläche (22, 23) aufweist, der zweite Hebel (40) am Lagerbauteil (16) so geführt ist, dass ein Verriegelungsabschnitt des zweiten Hebels (40) in der Verriegelungsposition den oberen Teil der Wandfläche der Energiequelle (12) von innen klemmend erfasst und in einer Freigabeposition so weit nach oben verschwenkt ist, dass der Energiequelle (12) zumindest horizontal von der Seitenwand (14) fort bewegbar ist.

5. Flurförderzeug nach einem der Ansprüche 1 bis 4, **dadurch gekennzeichnet, dass** der mindestens eine Puffer (60) aus elastomerem Material besteht.

6. Flurförderzeug nach einem der Ansprüche 1 bis 5, **dadurch gekennzeichnet, dass** ein Lagerstift (36) für die Lagerung des zweiten Hebels (40) in einem bogenförmigen Schlitz (38) des Lagerbauteils (16) geführt ist.

7. Flurförderzeug nach einem der Ansprüche 1 bis 6, **dadurch gekennzeichnet, dass** das Lagerbauteil (16) einen Begrenzungsabschnitt (62) aufweist, gegen den ein Anschlagabschnitt des zweiten Hebels (40) in Eingriff kommt, wenn der zweite Hebel (40) in die Freigabeposition verstellt wird.

8. Flurförderzeug nach einem der Ansprüche 1 bis 7, **dadurch gekennzeichnet, dass** der zweite Hebel (40) zwei parallel beabstandete Hebelarme (46, 48) aufweist, die an parallel beabstandeten Hebelarmen des ersten Hebels (30) angelenkt sind.

9. Flurförderzeug nach einem der Ansprüche 1 bis 8, **dadurch gekennzeichnet, dass** an einem vertikalen Backenabschnitt (42) des zweiten Hebels (40) zwei seitlich beabstandete Puffer (60) angebracht sind, die mit jeweils einer Anschlagfläche (22, 23) des Lagerbauteils (16) zusammenwirken.

10. Flurförderzeug nach einem der Ansprüche 1 bis 9, **dadurch gekennzeichnet, dass** der dritte Hebel (50) beim Öffnen des ersten Hebels (30) die Energiequelle (12) um mindestens 30 mm aus dem Batterieträger (10) herausschiebt.

11. Flurförderzeug nach einem der Ansprüche 1 bis 10, **dadurch gekennzeichnet, dass** der dritte Hebel (50) an einem Lagerabschnitt (31) des erstens Hebels (30) angeordnet ist.

12. Flurförderzeuge nach einem der Ansprüche 1 bis 11, **dadurch gekennzeichnet, dass** der dritte Hebel (50) um eine Achse (51) schwenkbar an dem ersten Hebel (30) gelagert ist und beim Öffnen des ersten Hebels (30) von einen Anschlag (35) abgestützt wird.

13. Flurförderzeuge nach einem der Ansprüche 1 bis 12, **dadurch gekennzeichnet, dass** der dritte Hebel (50) und der erste Hebel (30) beim Wegschieben der Energiequelle (12) von der Verriegelungsvorrichtung (18) einen Winkel von mehr von 90° einschließen.

## Claims

1. A forklift, a battery holder (10) being arranged in the frame thereof and an energy source (12) being able to be moved into or out of said battery holder, a locking device (18) comprising two cooperating levers (30, 40) being provided, said locking device-releasably locking the energy source (12) in the installed state relative to the frame and/or a battery holder (10), the device (18) for locking the energy source (12) comprising
- at least one first lever (30) which is mounted about an axle fixed to the vehicle and
- at least one second lever (40) which is pivotably mounted on the first lever (30) and is designed such that it grips at least one wall surface of the energy source (12) by means of at least one buffer (60) in a clamping manner,
**characterized in that** at least one third lever (50) is provided which, when the first lever (30) is opened, is guided into the battery holder (10) and pushes the energy source (12) away from the locking device (18).

2. The forklift as claimed in claim 1, **characterized in that** the energy source (12) is a battery block (12).

3. The forklift as claimed in claim 1 or 2, **characterized in that** the first and second levers (30, 40) form a toggle lever lock in which the first lever (30) is pivoted via the dead center point of the toggle lever lock when the second lever (40) is in a locked position.

4. The forklift as claimed in one of claims 1 to 3, **characterized in that** a side wall (14) may be attached to one end of the battery holder (10), said side wall holding a bearing component (16) at the upper end, on which the first lever (30) is pivotably mounted, the bearing component (16) comprising a stop surface (22, 23), and the second lever (40) being guided on the bearing component (16) such that a locking portion of the second lever (40) in the locked position grips the upper part of the wall surface of the energy source (12) from the inside in a clamping manner, and in a released position is pivoted sufficiently far upward for the energy source (12) to be able to be moved away from the side wall (14) at least horizontally.

5. The forklift as claimed in one of claims 1 to 4, **characterized in that** the at least one buffer (60) consists of elastomeric material.

6. The forklift as claimed in one of claims 1 to 5, **characterized in that** a bearing pin (36) for mounting the second lever (40) is guided in a curved slot (38) of the bearing component (16).

7. The forklift as claimed in one of claims 1 to 6, **characterized in that** the bearing component (16) comprises a limiting portion (62) against which a stop portion of the second lever (40) comes into engagement when the second lever (40) is displaced into the released position.

8. The forklift as claimed in one of claims 1 to 7, **characterized in that** the second lever (40) comprises two lever arms (46, 48) spaced apart in parallel with one another, which are articulated on lever arms of the first lever (30) spaced apart in parallel with one another.

9. The forklift as claimed in one of claims 1 to 8, **characterized in that** two laterally spaced apart buffers (60) are attached to a vertical jaw portion (42) of the second lever (40), said buffers respectively cooperating with a stop surface (22, 23) of the bearing component (16).

10. The forklift as claimed in one of claims 1 to 9, **characterized in that** when the first lever (30) is opened, the third lever (50) pushes the energy source (12) out of the battery holder (10) by at least 30 mm.

11. The forklift as claimed in one of claims 1 to 10, **characterized in that** the third lever (50) is arranged on a bearing portion (31) of the first lever (30).

12. The forklifts as claimed in one of claims 1 to 11, **characterized in that** the third lever (50) is pivotably mounted on the first lever (30) about an axle (51) and is supported by a stop (35) when the first lever (30) is opened.

13. The forklifts as claimed in one of claims 1 to 12, **characterized in that** the third lever (50) and the first lever (30) encompass an angle of more than 90° when the energy source (12) is pushed away from the locking device (18).

## Revendications

1. Chariot élévateur, dans le cadre duquel est disposé un support de batterie (10) dans lequel une source d'énergie (12) peut être introduite ou dont elle peut être extraite, un dispositif de verrouillage (18) présentant deux leviers (30, 40) concourants étant prévu, qui, dans l'état monté, verrouille de façon amovible la source d'énergie (12) par rapport au cadre ou à un support de batterie (10), le dispositif (18), pour le verrouillage de la source d'énergie (12),
- présentant au moins un premier levier (30) qui est supporté autour d'un axe fixe par rapport au véhicule et,
- présentant au moins un deuxième levier (40) qui est supporté en pivotement sur le premier levier (30) et est réalisé de sorte qu'il saisit avec serrage au moins une face de paroi de la source d'énergie (12) à l'aide d'au moins un tampon (60),
**caractérisé en ce qu'**il est prévu au moins un troisième levier (50) qui, lors d'une ouverture du premier levier (30), est guidé dans le support de batterie (10) et éloigne par coulissement la source d'énergie (12) du dispositif de verrouillage (18).

2. Chariot élévateur selon la revendication 1, **caractérisé en ce que** la source d'énergie (12) est un bloc de batterie (12).

3. Chariot élévateur selon la revendication 1 ou 2, **caractérisé en ce que** le premier et le deuxième levier (30, 40) forment une fermeture à genouillère, où le premier levier (30) est pivoté via le point mort de la fermeture à genouillère quand le deuxième levier (40) est dans une position de verrouillage

4. Chariot élévateur selon une des revendications 1 à 3, **caractérisé en ce que**, à une extrémité du support de batterie (10), une paroi latérale (14) peut être mise en place qui, à l'extrémité supérieure, retient un composant de palier (16) sur lequel repose en pivotement le premier levier (30), **en ce que** le composant de palier (16) présente une face de butée (22, 23), **en ce que** le deuxième levier (40) est guidé sur le composant de palier (16) de sorte qu'un tronçon de verrouillage du deuxième levier (40), dans la position de verrouillage, saisit avec serrage depuis l'intérieur la partie supérieure de la face de paroi de la source d'énergie (12) et, dans une position de libération, est pivoté vers le haut suffisamment pour que la source d'énergie (12) puisse être déplacée de la paroi latérale (14) au moins horizontalement.

5. Chariot élévateur selon une des revendications 1 à 4, **caractérisé en ce que** le tampon (60) au moins au nombre de un est réalisé en matériau élastomère.

6. Chariot élévateur selon une des revendications 1 à 5, **caractérisé en ce qu'**une broche de palier (36) pour supporter le deuxième levier (40) est guidée dans une fente arquée (38) du composant de palier (16).

7. Chariot élévateur selon une des revendications 1 à 6, **caractérisé en ce que** le composant de palier (16) présente un tronçon de limitation (62) contre lequel un tronçon de butée du deuxième levier (40) vient s'engager quand le deuxième levier (40) est déplacé dans la position de libération.

8. Chariot élévateur selon une des revendications 1 à 7, **caractérisé en ce que** le deuxième levier (40) présente deux bras de levier (46, 48) espacés et parallèles qui sont articulés sur des bras de levier espacés et parallèles du premier levier (30).

9. Chariot élévateur selon une des revendications 1 à 8, **caractérisé en ce que**, sur un tronçon de joue vertical (42) du deuxième levier (40), il est disposé deux tampons (60) espacés latéralement qui coopèrent avec respectivement une face de butée (22, 23) du composant de palier (16).

10. Chariot élévateur selon une des revendications 1 à 9, **caractérisé en ce que** le troisième levier (50), lors de l'ouverture du premier levier (30), fait coulisser la source d'énergie (12) hors du support de batterie (10) sur au moins 30 mm.

11. Chariot élévateur selon une des revendications 1 à 10, **caractérisé en ce que** le troisième levier (50) est disposé sur un tronçon de palier (31) du premier levier (30).

12. Chariot élévateur selon une des revendications 1 à 11, **caractérisé en ce que** le troisième levier (50) est supporté sur le premier levier (30) en pivotement autour d'un axe (51) et est supporté par une butée (35) lors de l'ouverture du premier levier (30).

13. Chariot élévateur selon une des revendications 1 à 12, **caractérisé en ce que** le troisième levier (50) et le premier levier (30) englobent un angle de plus de 90° lors du mouvement d'éloignement coulissant de la source d'énergie (12) à partir du dispositif de verrouillage (18).
